# EUROPÄISCHE PATENTSCHRIFT

(11) **EP 1 542 859 B1**
(45) Veröffentlichungstag und Bekanntmachung des Hinweises auf die Patenterteilung: **03.05.2006**
(21) Anmeldenummer: 03757860.6
(22) Anmeldetag: 12.09.2003
(51) Int. Cl.: B29C 69/00, B29C 47/00

(54) **VERFAHREN ZUR BEREITSTELLUNG VON FOLIENBAHNEN**
METHOD FOR THE PREPARATION OF FILM WEBS
PROCEDE DE MISE A DISPOSITION DE FEUILLES EN CONTINU

(30) Priorität: 20.09.2002 DE 10243958
(43) Veröffentlichungstag der Anmeldung: 22.06.2005
(73) Patentinhaber: Windmöller & Hölscher KG, 49525 Lengerich (DE)
(72) Erfinder: BOSSE, Frank, 49549 Tecklenburg (DE)
(86) Internationale Anmeldenummer: PCT/EP2003/010345
(87) Internationale Veröffentlichungsnummer: WO 2004/028788

(56) Entgegenhaltungen:
- DE-A- 4 303 952
- DE-U- 29 621 374
- US-A- 3 061 875
- US-A- 4 115 048
- US-A- 4 270 891
- US-A1- 2002 012 785

## Beschreibung

Die Erfindung betrifft ein Verfahren zur Bereitstellung von Folienbahnen, welches folgende Verfahrensmerkmale umfasst:
- Extrudieren eines Folienschlauches
- Flachlegen und Abquetschen des Folienschlauches
- Reversieren des Folienschlauches
- Schneiden des extrudierten Folienschlauchs

Verfahren dieser Art kommen in der Regel im Zusammenhang mit Schlauchfolienextrusionsanlagen zum Einsatz. Oft wird ein Folienschlauch extrudiert, flachgelegt, abgequetscht und anschließend einer Wickelvorrichtung zugeführt. Besonders erwähnenswert ist noch, dass die Schlauchfolienbahn in der Regel nach der Abquetschung eine so genannte Reversiervorrichtung durchläuft.

Alle vorgenanten Funktionseinheiten sind druckschriftlich bekannt. So beansprucht zum Beispiel die DE 100 40 055 eine solche Reversiervorrichtung und zeigt auch die zugehörigen Abquetsch- und Flachlegevorrichtungen.
Um den Folienschlauch in Folienbahnen zu verwandeln, bedient man sich verschiedenartiger Schneidvorrichtungen, welche an der Wickelvorrichtung angebracht sind und die Schläuche unmittelbar vor Beginn des Wickelprozesses in Folienbahnen verwandeln. In der Regel werden zu diesem Zweck Besäumschnitte an beiden Kannten des flachgelegten Folienschlauches durchgeführt. Bei diesem Vorgang entsteht jedoch erheblicher Abfall. Da moderne Regelverfahren jedoch eine genaue Einstellung des Durchmessers der extrudierten Schlauchfolie und damit der Breite des flachgelegten Folienschlauchs erlauben, wird vielfach auf einen Besäumschnitt verzichtet. Stattdessen werden Schlüzmesser an den Wickelvorrichtungen angebracht, welche die flachgelegte Folienschlauchbahn unmittelbar an ihren Kannten aufschlitzen und damit unnötigen Abfall vermeiden.
Diese Art der Herstellung von Folienbahnen aus Folienschläuchen eignet sich jedoch nicht für dünne, empfindliche oder klebrige Folien. Diese Folien werden durch die Einwirkung des Schlitzmessers auf den flachgelegten Folienschlauch in Mitleidenschaft gezogen. Folien der vorgenannten Art werden also nach wie vor mit Hilfe von Besäumschnitten, die an der Folie vorgenommen werden, nachdem diese die Reversiervorrichtung durchlaufen hat, bereitgestellt.
Die DE 29621374 U zeigt eine Vorrichtung, mit der sich ein Verfahren zur Bereitstellung von Folienbahnen (7,17), welches folgende Verfahrensmerkmale umfasst, durchführen lässt:
- Extrudieren eines Folienschlauches (1),
- Flachlegen und Abquetschen des Folienschlauches (1),
- Reversieren des Folienschlauches (1),
- Schneiden des extrudierten Folienschlauchs (1) in zumindest zwei Folienbahnen, wobei der Folienschlauch in Förderrichtung des Folienschlauches (z) geschnitten wird, bevor die Abquetschung (3) erfolgt.
Mit einem solchen Verfahren werden die Besäumschnitte überflüssig. Vor allem jedoch sind mit einer solchen Vorrichtungen klebrige Folien herstellbar. Die angesprochene Vorrichtung ist jedoch aufwendig, da unter anderem zwei Reversiervorrichtungen vorgesehen sind, auf denen die entstandenen Folienbahnen getrennt geführt werden.
Daher besteht die Aufgabe der vorliegenden Erfindung darin, ein Verfahren zur Herstellung klebriger Folien vorzuschlagen, welches die Kosten der Vorrichtung in Grenzen hält.

Die Aufgabe wird dadurch gelöst,
- dass die entstandenen zumindest zwei Folienbahnen (7, 17) lediglich eine Reversiervorrichtung (100) durchlaufen, bevor sie einer ortsfesten Weiterverwertungs- oder Speichervorrichtung zugeführt werden,
- dass sich Teile der Flächen der zumindest zwei Folienbahnen (7, 17) beim Reversieren berühren,
- dass ein Folienschlauch (1) verarbeitet wird, der über eine klebrige Außenfläche verfügt und
- dass sich beim Reversieren lediglich die Flächen des geschnittenen Folienschlauchs (1) berühren, welche zuvor die Innenflächen des Folienschlauchs (1) gebildet haben.

Bei Vorrichtungen dieser Art kann die besagte Schneidvorrichtung den Folienschlauch schneiden, während sich noch Luft in der Folienblase befindet, so dass keine Beschädigung der Innenflächen des Folienschlauchs auftritt, wenn das Messer die Folie durchschneidet und in den Innenraum des Folienschlauches hineingreift.

Bei dem erfindungsgemäßen Verfahren können die durch den Schneidvorgang entstandenen Folienbahnen reversiert werden, während diese flach aufeinander liegen.

Hierbei bildet die klebrige Folienschicht den Außenumfang des extrudierten Folienschlauchs. Auf diese Weise wird ein Verkleben der beiden Folienbahnen insbesondere bei ihrem gemeinsamen Transport durch die Reversiervorrichtung vermieden.

Weitere Ausführungsformen der Erfindung gehen aus den Zeichnungen und der gegenständlichen Beschreibung hervor.

Die einzelnen Figuren zeigen:
- Fig. 1: Eine vollständige Ansicht einer Vorrichtung, bei der ein Schnitt vor der Abquetschung vorgenommen wird.
- Fig. 2: Eine Seitenansicht dieser Vorrichtung
- Fig. 3: Eine Seitenansicht einer erfindungsgemäßen Vorrichtung

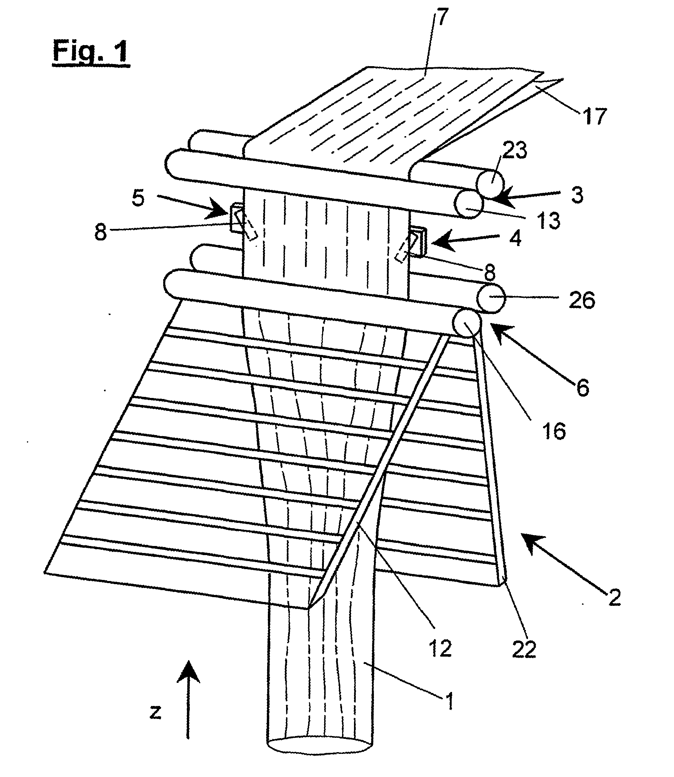

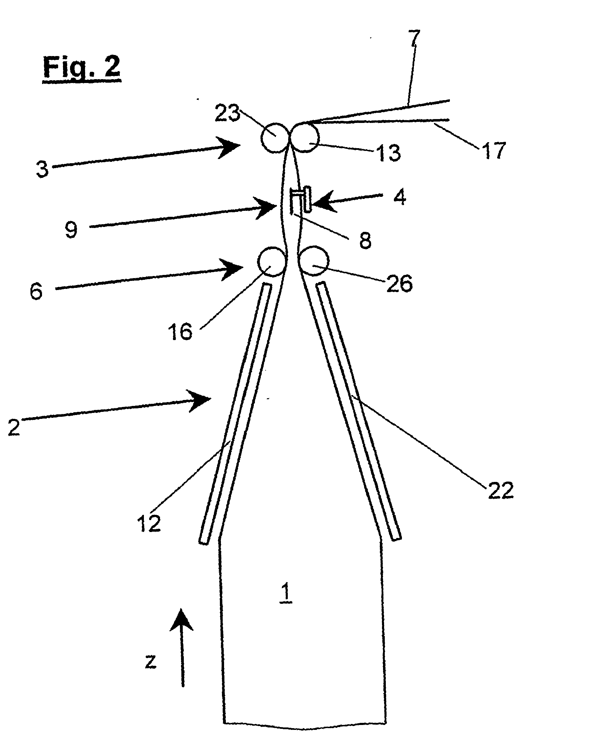

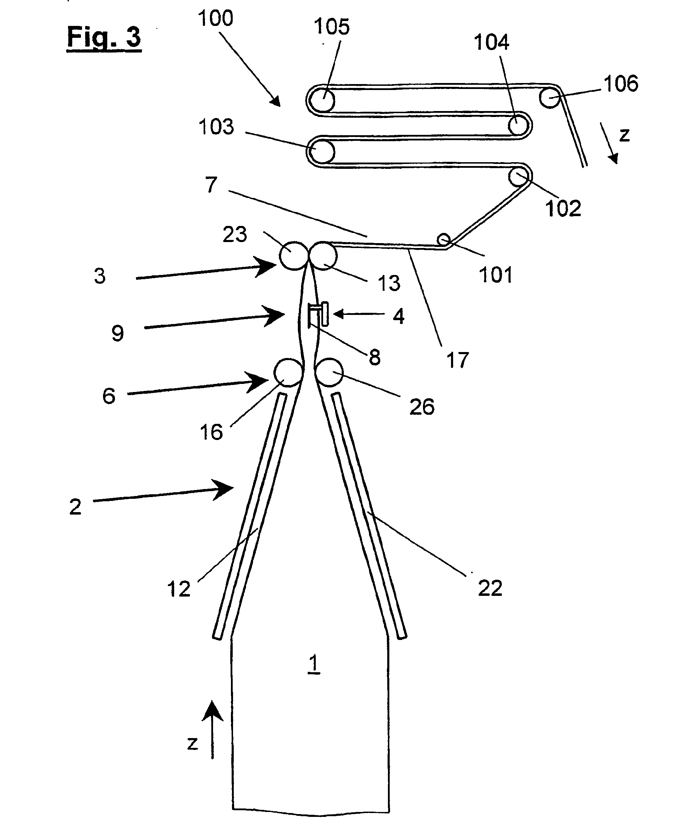

Die Figuren 1 und 2 zeigen eine Vorrichtung, welche unter anderem über eine Flachlegevorrichtung 2, eine Schneidvorrichtung 4 und eine Abquetschvorrichtung 3 verfügt Da die Schneidvorrichtung 4 vor der Abquetschvorrichtung 3 dargestellt ist, kann die Folie vor dem fälligen Reversiervorgang geschnitten werden.
In Förderrichtung z lässt sich der Werdegang des Schlauches folgendermaßen beschreiben:
Der von einer nicht gezeigten Schlauchfolienextrusionseinheit extrudierte Folienschlauch 1 weist gewöhnlich ein in radialer Richtung kreisrundes Profil auf. In Transportrichtung z schließt sich eine Flachlegevorrichtung 2 an, die das Profil sukzessive von zwei gegenüber liegenden Seiten her zusammendrückt. Hinter der Flachlegevorrichtung 2 wird der Folienschlauch 1 durch eine Vorabquetscheinrichtung 6 geführt. Die zugehörigen Vorabquetschwalzen 16 und 26 sind derart voneinander beabstandet, dass die geraden Seiten des Folienschlauches 1 noch nicht aufeinander liegen. Durch das noch nicht vollständige Abquetschen verbleibt ein Luftpolster im Folienschlauch 1. Es schließen sich zwei Schneidvorrichtungen 4, 5 an. Diese Schneidvorrichtungen 4, 5 umfassen jeweils ein Messer 8. Die Messer 8 sind auf nicht näher dargestellte Weise am Maschinengestell befestigt. Diese Messer 8 sind derart angeordnet, dass sie den Folienschlauch 1 an seinen Endrundungen aufschlitzen. Im weiteren Verlauf durchlaufen die durch die Schlitzung entstandenen Folienbahnen 7, 17 die Abquetschvorrichtung 3, die aus zwei Abquetschwalzen 13, 23 besteht. Diese Vorrichtung dient dazu, die beiden Folienbahnen 7, 17 flach aufeinander zu drücken und damit den Einschluss von Luft zwischen den beiden Folienbahnen 7, 17 zu verhindern. Der Verdeutlichung halber sind die Folienbahnen 7, 17 in Figur 1 auseinander laufend dargestellt, werden aber flach aufeinander liegend Reversiereinrichtung zugeführt wie es in Figur 3 dargestellt ist.
Eine geeignete Reversiereinrichtung ist beispielsweise in der Druckschrift DE 100 40 055 A1 näher beschrieben. Die gemeinsame Führung der beiden aufeinanderliegenden Folien in einer Reversiervorrichtung ist grundsätzlich auch in einer anderen Reversiervorrichtung möglich.

Die in Fig. 2 dargestellte Seitenansicht der erfindungsgemäßen Vorrichtung verdeutlicht den Prozess des Flachlegens des Folienschlauches in der Flachlegevorrichtung 2, von der nur die beiden Seiten der Flachlegeplatten 12, 22 zu sehen sind. Deutlich zu erkennen ist, dass die sich anschließenden Vorabquetschwalzen 16, 26 einen festgelegten Abstand voneinander haben. Dieser Abstand wird, u. a. in Abhängigkeit der Betriebsparameter derart gewählt, dass sich in Höhe der Schneidvorrichtung 4 noch ein Luftpolster innerhalb des Folienschlauches befindet. Aufgrund des Luftpolsters haben die Teile des Folienschlauchs 1, die nach dem Schlitzen die Folienbahnen 7, 17 bilden, einen etwas größeren Abstand voneinander als beim Durchlaufen der Abquetschvorrichtung. Die Abquetschwalzen 13, 23 verhindern, dass die Luft durch die Abquetschvorrichtung 3 entweichen kann. Auf diese Weise kann der Folienschlauch seitlich geschlitzt werden, ohne dass Gefahr besteht, auch sehr dünne oder klebrige Folienbahnen 7, 17 durch Kontakt mit den Messern 8 zu beschädigen.

Die in den Figuren dargestellten Vorrichtungen offenbaren eine besonders vorteilhafte Art, den Folienschlauch 1 vor Erreichen der Abquetschvorrichtung 3 zu schneiden. Es ist jedoch auch möglich, den Folienschlauch vor der Abquetschvorrichtung 3 zu schneiden, ohne eine Vorabquetschvorrichtung 6 vorzusehen.
Figur 3 zeigt noch einmal die in Figur 2 dargestellte Vorrichtung, wobei noch einmal eine Reversiervorrichtung 100 mit dargestellt ist. Nachdem die Folienbahnen 1, 17 die Abquetschvorrichtung 3 durchlaufen haben, laufen sie zusammen an der Führungswalze 101, der ersten Umlenkwalze 102, der ersten Luftwendestange 103, der zweiten Umlenkwalze 104 und der zweiten Luftwendestange 105 vorbei. Schließlich erreichen die Folienbahnen 7, 17 mit der Abzugswalze 106 eine ortsfeste Walze, die nicht an dem Reversierprozess teilnimmt. Anschließend werden die Folienbahnen 7, 17 nicht dargestellten Weiterverarbeitungs- oder Speichervorrichtungen zugeführt. Der Abstand zwischen den Folienbahnen 7, 17 ab der Abquetschvorrichtung werden unmaßstäblich groß dargestellt, um zu verdeutlichen, dass es sich hier um zwei Bahnen handelt. In der Regel werden zunächst Folienwickel gebildet. Hierbei können die Folienbahnen einzeln oder gemeinsam aufgewickelt werden.
An dieser Stelle sei noch einmal erwähnt, dass in Figur 3 lediglich der prinzipielle Aufbau einer beispielhaften sehr weit fortgeschrittenen Reversiervorrichtung dargestellt wurde, wobei die Halterung der skizzierten Folienführungselemente 101 bis 105 sowie der eigentliche Reversiervorgang, welche durch Reversierbewegungen der Walzen und Stangen 103 bis 105 um eine vertikale Achse zustande kommt, nicht dargestellt wurde. Das erfindungsgemäße Verfahren umfasst jedoch alle Reversierverfahren.

Darüber hinaus ist noch einmal zu betonen, dass auch Reversiervorrichtungen mit abweichenden Zahlen an Umlenkwalzen 102, 104 und Wendestangen 103, 105 bekannt sind. In diesem Zusammenhang wird noch einmal auf Druckschriften wie die DE 100 40 055, die DE 43 03 952 oder die EP 0 873 845 verwiesen.

Vorteilhaft sind insbesondere solche Reversiereinrichtungen, bei welchen jeweils eine Wendestange und jeweils eine Umlenkwalze ein Funktionspaar bilden. Bei solchen Funktionspaaren führt die eine Umlenkwalze und die eine Wendestange eine Reversierbewegung aus, welche bezüglich einer Achse stattfindet, die orthogonal zur Drehbewegung der Umlenkwalze um ihre Hauptsymmetrieachse verläuft. In aller Regel ist diese Achse vertikal und damit in Hauptförderrichtung der Folie ausgerichtet. Es sind Reversiervorrichtungen mit einem, zwei oder gar drei Funktionspaaren bekannt. Das Wort Funktionspaar und seine Bedeutung für die beschriebenen Reversiervorrichtungen wird in der Anmeldung DE 100 40 055 beschrieben.

| **Bezugszeichenliste** | |
|---|---|
| 1 | Folienschlauch |
| 2 | Flachlegevorrichtung |
| 3 | Abquetschvorrichtung |
| 4 | Schneidvorrichtung |
| 5 | Schneidvorrichtung |
| 6 | Vorabquetschvorrichtung |
| 7 | Folienbahn |
| 8 | Messer |
| 9 | statisches Luftpolster |
| 10 | Pfeil in Förderrichtung des Folienschlauches |
| 11 | |
| 12 | Seitenstrebe |
| 13 | Abquetschwalze |
| 14 | |
| 15 | |
| 16 | Vorabquetschwalze |
| 17 | Folienbahn |
| 18 | |
| 19 | |
| 20 | |
| 21 | |
| 22 | |
| 23 | Abquetschwalze |
| 24 | |
| 25 | |
| 26 | Vorabquetschwalze |
| 100-106 | Folienführungselemente |
| | |
| z | Förderrichtung des Folienschlauches |

## Patentansprüche

1. Verfahren zur Bereitstellung von Folienbahnen (7,17), welches folgende Verfahrensmerkmale umfasst
- Extrudieren eines Folienschlauches (1),
- Flachlegen und Abquetschen des Folienschlauches (1),
- Reversieren des Folienschlauches (1),
- Schneiden des extrudierten Folienschlauchs (1) in zumindest zwei Folienbahnen, wobei der Folienschlauch in Förderrichtung des Folienschlauches (z) geschnitten wird, bevor die Abquetschung (3) erfolgt,
**dadurch gekennzeichnet,**
- **dass** die entstandenen zumindest zwei Folienbahnen (7, 17) lediglich eine Reversiervorrichtung (100) durchlaufen, bevor sie einer ortsfesten Weiterverwertungs- oder Speichervorrichtung zugeführt werden,
- **dass** sich Teile der Flächen der zumindest zwei Folienbahnen (7, 17) beim Reversieren berühren,
- **dass** ein Folienschlauch (1) verarbeitet wird, der über eine klebrige Außenfläche verfügt und
- **dass** sich beim Reversieren lediglich die Flächen des geschnittenen Folienschlauchs (1) berühren, welche zuvor die Innenflächen des Folienschlauchs (1) gebildet haben.

2. Verfahren nach Anspruch 1
**dadurch gekennzeichnet, dass**
es sich bei den Flächen, welche sich berühren, um Bestandteile der Schlauchfolienbahn (7, 17) handelt, welche Innenflächen des Folienschlauchs (1) gebildet haben.

3. Verfahren nach einem der vorstehenden Ansprüche
**dadurch gekennzeichnet, dass**
die Folienbahnen (7, 17) an eine Reversiervorrichtung (100) mit zumindest einer reversierenden Luftwendestange (103, 105) und zumindest einer reversierenden Umlenkwalze (102, 104) vorbeigeführt werden.

## Claims

1. Method for the preparation of film webs (7, 17), which comprises the following method features:
- extruding a film tube (1),
- laying flat and squeezing the film tube (1),
- reversing the film tube (1),
- cutting the extruded film tube (1) into at least two film webs, the film tube being cut in the conveying direction of the film tube (z) before the squeezing (3) takes place,
**characterized**
- **in that** the at least two film webs (7 , 17) that are created merely run through a reversing device (100) before they are fed to a fixed further processing or storage device,
- **in that** parts of the surfaces of the at least two film webs (7, 17) touch during reversing,
- **in that** a film tube (1) which has an adhesive outer surface is processed, and
- **in that** only the surfaces of the cut film tube (1) which have previously formed the inner surfaces of the film tube (1) touch during reversing.

2. Method according to Claim 1, **characterized in that** the surfaces which touch constitute parts of the tubular film web (7, 17) which have formed inner surfaces of the film tube (1).

3. Method according to one of the preceding claims, **characterized in that** the film webs (7, 17) are made to pass by a reversing device (100) with at least one reversing air turning bar (103, 105) and at least one reversing deflecting roller (102, 104).

## Revendications

1. Procédé de mise à disposition de feuilles continues (7, 17), lequel comporte les caractéristiques de procédé suivantes:
- extrusion d'un tuyau composé de feuilles (1),
- pose à plat et compression du tuyau composé de feuilles (1),
- réversion du tuyau composé de feuilles (1),
- coupe du tuyau composé de feuilles extrudé (1) dans au moins deux feuilles continues, le tuyau composé de feuilles étant coupé dans le sens d'alimentation du tuyau composé de feuilles (z) avant que la compression (3) n'ait lieu,
**caractérisé en ce que**:
- les deux feuilles continues (7, 17) minimales produites passent uniquement par un dispositif de réversion (100) avant qu'elles ne soient amenées vers un dispositif stationnaire de transformation ou de stockage,
- les parties des surfaces des deux feuilles continues minimales (7, 17) se touchent lors de la réversion,
- qu'est traité un tuyau composé de feuilles (1), qui dispose d'une surface externe collante et
- lors de la réversion, seules les surfaces du tuyau composé de feuilles (1) coupé se touchent, lesquelles formaient auparavant les surfaces internes du tuyau composé de feuilles (1).

2. Procédé selon la revendication 1, **caractérisé en ce que** les surfaces, qui se touchent, sont des parties intégrantes de la feuille continue tubulaire (7, 17), lesquelles parties formaient les surfaces internes du tuyau composé de feuilles (1).

3. Procédé selon l'une quelconque des revendications précédentes, **caractérisé en ce que** les feuilles en continu (7, 17) sont passées le long d'un dispositif de réversion (100) comportant au moins une barre de retournement par air (103, 105) réalisant la réversion et au moins un cylindre déflecteur (102, 104) réalisant la réversion.
